# EUROPÄISCHE PATENTSCHRIFT

(11) **EP 4 296 412 B1**
(45) Veröffentlichungstag und Bekanntmachung des Hinweises auf die Patenterteilung: **23.04.2025**
(21) Anmeldenummer: 23177593.3
(22) Anmeldetag: 06.06.2023
(51) Int. Cl.: D01G 27/00, B65H 18/22

(54) **VORRICHTUNG ZUR HERSTELLUNG EINES WATTEWICKELS**
DEVICE FOR PRODUCING A LAP COIL
DISPOSITIF DE FABRICATION D'UN ROULEAU DE OUATE

(30) Priorität: 20.06.2022 CH 7372022
(43) Veröffentlichungstag der Anmeldung: 27.12.2023
(73) Patentinhaber: Rieter AG, 8406 Winterthur (CH)
(72) Erfinder: SCHMID, Alexander, 8400 Winterthur (CH); STUTZ, Ueli, 8406 Winterthur (CH)

(56) Entgegenhaltungen:
- WO-A1-2005/038100
- CH-A5- 695 692
- DE-A1- 102008 040 110
- DE-A1- 102017 112 928

## Beschreibung

Die Erfindung bezieht sich auf eine Vorrichtung zur Herstellung eines Wattewickels aus einer Wattebahn.

Eine derartige Vorrichtung, wobei der Wattewickel unter Verwendung eines umlaufenden Riemens gebildet wird, ist beispielsweise bereits beschrieben worden in der CH 695 692 A5. Die Vorrichtung dient dazu ein Vlies, einen Flor oder Watte aus Fasermaterial zu einem Wattewickel aufzurollen, bevor das Fasermaterial einer weiteren Behandlung unterzogen wird. So kann die Vorrichtung beispielsweise in einer Kämmerei zur Aufnahme eines aus einem Streckwerkauslauf stammenden, über Kehrbleche, Kalanderwalzen und/oder dergleichen zugeführten Vlieses dienen, wobei der erzeugte Wattewickel anschliessend einer Kämmmaschine vorgelegt wird. Im Folgenden ist im Zusammenhang mit dem zugeführten Fasermaterial der Einfachheit halber lediglich von einer Wattebahn die Rede, was nicht in einschränkendem Sinne zu verstehen ist. Dabei wird durch einen endlosen Riemen zwischen zwei Umlenkrollen eine Schlaufe gebildet. In diese Schlaufe wird ein Kern eingelegt. Der Kern wird beidseitig durch Wickelscheiben gehalten. Eine Wattebahn wird durch Führungselemente an den Kern herangeführt und zwischen den Wickelscheiben auf dem Kern zu einem Wattewickel geformt. Der die Schlaufe bildende Riemen wird dabei um die Umlenkrollen sowie um eine Spannrolle geführt. Die Wattebahn wird durch den umlaufenden Riemen an den Kern gepresst und darauf aufgewickelt. Zu Qualitätsverlusten kommt es, wenn der Riemen beim Wickelprozess nach der Seite hin und quer zu seiner Laufrichtung abdriftet und mit seinen Rändern mit den seitlichen Wickelscheiben in Kontakt kommt. Einerseits kann es dabei zu Beschädigungen des Riemens in seinen Randbereichen kommen und andererseits können Randfasern aus der aufzuwickelnden Wattebahn herausgezogen werden, was wiederum zu einem qualitativ unsauberen Wickel führt.

Um die Qualität des zu bildenden Wattewickels konstant zu halten, ist es erforderlich, dass der Riemen nach einer bestimmten Laufzeit gegen einen neuen Riemen ausgetauscht wird. Sofern der Riemen beschädigt wird, ist natürlich ein Austausch bereits vor Ablauf dieser Laufzeit erforderlich. Da es sich um einen endlosen Riemen handelt, wird zur Demontage des Riemens der Riemen in entspanntem Zustand von den Umlenkrollen abgehoben, welche er aussen umschlingt und nach innen in den Aufwickelbereich verlagert. Anschliessend kann der Riemen quer zu den Achsen der Umlenkrollen zwischen zwei Umlenkrollen herausgenommen werden. Die Montage des neuen Riemens erfolgt entsprechend in umgekehrter Reihenfolge.

Bedingt durch die Steifigkeit des Riemens und einer zur Bildung des Wattewickels notwendigen Anpresskraft des Riemens an den Kern respektive den sich auf dem Kern bildenden Wickel wird durch die Spannrolle eine Spannung bis zu 20 kN/cm² in den Riemen eingebracht. Die hohen Zugkräfte des Riemens müssen in den Lagerungen der Rollen abgefangen werden. Zusätzlich sind die innenliegenden Rollen, welche durch den Riemen umlaufen werden, derart zu halten, dass ein Austausch des Riemens in einfacher Weise möglich ist. Zu diesem Zweck sind einseitig gelagerte Rollen aus dem Stand der Technik bekannt. Durch die einseitige Lagerung der Rollen kann ein umlaufender Riemen nach dessen Entspannung in die den Lagern entgegengesetzte Richtung von den Rollen abgezogen und ein neuer Riemen in endlosem Zustand gegen die Lagerungen der Rollen aufgeschoben werden.

Zur Aufnahme der hohen Spannkräfte wurde in der CH 695 692 A5 vorgeschlagen im Maschinengestell im Bereich der Arbeitsposition der die Schlaufe bildenden Rollen zusätzliche Mittel vorzusehen, über welche das Lagerelement der Rolle in einem Endbereich entgegen der Riemenspannung abgestützt werden. Diese Mittel wurden als schwenkbare Klinken vorgesehen, um eine Bewegungsfreiheit der Rollen bei einem Wattewickelwechsel nach einem Öffnen der Klinken aufrecht zu erhalten. Um einen einfachen Austausch des Riemens zu erreichen und trotzdem eine hohe Spannkraft im Riemen zu ermöglichen, wurde in der in der DE 10 2008 040 110 A1 vorgeschlagen die innenliegenden Rollen aufgrund der Belastung zwar beidseitig zu lagern, jedoch eine Vorrichtung vorzusehen, welche eine rasche Demontage zumindest einer Lagerstelle der beidseitig gelagerten Rollen vorzusehen. Nachteilig dabei ist der hohe Aufwand, welcher für eine Riemenwechsel zu treiben ist bei einer beidseitigen Lagerung der innenliegenden Rollen. Ebenfalls ergeben sich Nachteile für den Betrieb der Vorrichtung bei einer Ergänzung durch zusätzliche Halteelemente bei einseitiger Lagerung der Rollen.

Es ist deshalb die Aufgabe der Erfindung eine Vorrichtung vorzuschlagen, welche einen einfachen Austausch des Riemens ermöglicht und die hohen Anforderungen an eine parallele Riemenführung gewährleistet.

Die Aufgabe wird durch eine Vorrichtung mit den Merkmalen des unabhängigen Anspruchs gelöst. Dabei wird eine Vorrichtung zur Herstellung eines Wattewickels aus einer Wattebahn mit einem Maschinengestell und mit einem umlaufenden endlosen Riemen vorgeschlagen.

Die Vorrichtung weist eine drehbar gelagerte Umlenkrolle mit einer Umlenkrollenachse und eine drehbar gelagerte Öffnerrolle mit einer Öffnerrollenachse und eine drehbar gelagerte Auswurfrolle mit einer Auswurfrollenachse und eine drehbar gelagerte Spannrolle mit einer Spannrollenachse auf, wobei der Riemen um die Spannrolle und die Umlenkrolle und die Öffnerrolle und die Auswurfrolle umläuft. Weiter umfasst die Vorrichtung einen Kern, der zur Aufnahme des Wattewickels in einer zwischen der Umlenkrolle und der Öffnerrolle gebildeten, mit einem zunehmendem Wattewickeldurchmesser grösser werdenden Schlaufe des Riemens ortsfest in einer Wickelachse angeordnet ist. Die Öffnerrolle und die Auswurfrolle und die Spannrolle sind jeweils drehbar auf einem einseitig und drehfest in einem verschwenkbaren Element befestigten Achsstummel gelagert. Die Umlenkrolle ist mit einer einseitigen Lagerung drehbar im Maschinengestell gehalten. Dabei ist eine Einstellung einer Neigung der Umlenkrollenachse oder der Öffnerrollenachse oder der Umlenkrollenachse und der Öffnerrollenachse zur Wickelachse vorgesehen. Dadurch, dass die Rollen einseitig gelagert sind, wirkt bei einer Belastung durch den gespannten Riemen auf die Lagerung eine Biegekraft. Da die Elemente wie beispielsweise ein Wellenzapfen oder eine Welle grundsätzlich elastisch sind, ist die entsprechende Rollenachse durch den umlaufenden Riemen einer Biegung unterworfen. Diesem Umstand wie auch einer generellen Verformung der Maschinenelemente wird durch eine Einstellung der Neigung der Rollenachsen entgegengewirkt. Bei entspanntem Riemen sind dabei die Umlenkrollenachse und / oder die Öffnerrollenachse nicht parallel, sondern geneigt zur Wickelachse. Durch die Spannung des Riemens werden die Achsen derart verformt, dass sie im Wickelbetrieb parallel zur Wickelachse ausgerichtet sind und sich dadurch ein symmetrischer Umlauf des Riemens ergibt.

Bevorzugterweise ist die Umlenkrollenachse mit einer Neigung α von 0.05 bis 0.3 Winkelgraden zur Wickelachse angeordnet. Die Lagerung der Umlenkrolle ist in der Auslegung der einzelnen Elemente derart konstruiert, dass sich eine elastische Verformung, welche der eingestellten Neigung entspricht. Eine Konstruktion, welche keine oder eine über eine Länge der Umlenkrollenachse elastische Verformung zur Folge haben würde, wäre aufwändig und praktisch nur durch eine beidseitige Abstützung der Umlenkrolle sinnvoll. Idealerweise wird die Konstruktion der Umlenkrolle und ihrer Lagerung für eine Neigung von 0.1 Winkelgraden ausgelegt.

Bevorzugterweise ist die Umlenkrolle als Antriebswalze mit einer Antriebswalzenachse und mit einem Antrieb ausgeführt. Die Antriebswalze ist in einem Lagerflansch drehbar befestigt, wobei die Antriebswalzenachse mit einer Neigung (α) von 0.05 bis 0.3 Winkelgraden zur Wickelachse angeordnet ist. Dies hat den Vorteil, dass die Einstellung der Neigung der Antriebswalzenachse durch eine Schrägstellung der Befestigung im Lagerflansch erfolgt, d.h. je nach Wahl des Lagerflansches ist eine bestimmte Neigung gegeben. Der Lagerflansch wiederum ist drehfest im Maschinengestell gehalten. Ein Aussendurchmesser des Lagerflansches ist parallel zur Wickelachse ausgeführt. Ein Innendurchmesser des Lagerflansches ist mit der entsprechenden Neigung ausgeführt, wobei zwischen dem Innendurchmesser des Lagerflansches und der Antriebswalze eine Lagerung vorgesehen ist, sodass die Antriebswalze um die geneigte Antriebswalzenachse drehbar im Lagerflansch gehalten ist.

Vorteilhafterweise ist eine Einstellung einer Neigung β der Öffnerrollenachse zur Wickelachse durch Verdrehen des Achsstummels in seiner Halterung im Maschinengestell zwischen 0.1 und 0.8 Winkelgraden vorgesehen. Eine derart einfache Einstellmöglichkeit ist dadurch gegeben, dass der Achsstummel mit seinem dem Öffnerarm zugewandten Ende parallel zur Wickelachse im Öffnerarm drehfest gehalten ist. Das dem Öffnerarm abgewandte Ende des Achsstummels, auf welchem die Öffnerrolle drehbar gelagert ist, ist mit einer Neigung zur Wickelachse angeordnet. Bei einer Verdrehung des Achsstummes in seiner Befestigung am Öffnerarm verändert sich die Neigung der Öffnerrollenachse relativ zu einem Kreissektor, welcher einer Oberfläche der Öffnerrolle entspricht, die durch den umlaufenden Riemen berührt wird. Damit ändert sich die Neigung der Öffnerrollenachse zur Wickelachse in einer durch die beiden Achsen gebildeten Ebene.

Von Vorteil ist es, wenn zumindest eine Führungsrolle auf einer Aussenseite des Riemens vorgesehen ist, wobei die Führungsrolle ortsfest und drehbar beidseitig im Maschinengestell gelagert ist. Durch die Anordnung der Führungsrolle in einem Bereich der Spannrolle kann gewährleistet werden, dass die Spannrolle in jeder Stellung durch den Riemen mindestens auf ihrer halben Oberfläche umschlungen wird. Damit wird eine gleichmässige Beaufschlagung des Riemens mit einer Spannkraft erreicht.

Bevorzugterweise ist der Achsstummel der Öffnerrolle an einem um die Wickelachse im Maschinengestell schwenkbar gehaltenen Öffnerarm zur Öffnung der Schlaufe bei einem Wickelwechsel gelagert. Dadurch wird gegenüber einer linearen Bewegung eine einfache Konstruktion für die Gewährleistung einer Öffnerbewegung während eines Wickelwechsels ermöglicht. Weiter ist es auch für die Konstruktion einer Bewegungsmechanik der Auswurfrolle von Vorteil, wenn die Auswurfrolle an einem schwenkbar im Maschinegestell gehaltenen Auswurfarm gelagert ist. Der Öffnerarm und der Auswurfarm können beispielsweise durch pneumatische Zylinder verschwenkt werden.

Bevorzugterweise ist die Spannrolle in einem Spannarm gehalten, wobei der Spannarm schwenkbar im Maschinengestell gelagert und mit einem Pneumatikzylinder zur Spannung des Riemens durch eine Spannbewegung beaufschlagt ist. Durch die Anordnung des Pneumatikzylinders am Spannarm kann mit einer Hebelwirkung eine hohe Spannkraft in den Riemen eingebracht werden. Die Spannkraft ist durch eine einfache elektropneumatische Regelung einstellbar und konstant aufrecht zu erhalten.

Demgegenüber hat eine mechanische Spannung, beispielsweise durch eine Feder, den Nachteil einer nicht über den gesamten Federweg konstanten Spannkraft bei einer Änderung des Federweges, auch sind mechanische Systeme einer Alterung unterworfen und müssen von Zeit zu Zeit neu eingestellt und justiert werden.

Vorteilhafterweise ist für einen Riemenaustausch einzig eine Entlastung des Riemens vorgesehen. Ein zusätzliches Ausnutzen der verschwenkbaren Halterungen der verschiedenen Rollen neben einer Entlastung des Riemens durch die Spannrolle ist nicht notwendig. Da bei fehlendem Kern die Schlaufe für ein Abheben des Riemens von den Rollen eine genügend grosse Reserve darstellt, kann der Riemen über die einseitig gelagerten Rollen einfach abgezogen und ein Ersatzriemen eingefügt werden. Es sind für den Riemen keine Demontagearbeiten oder spezielle steuerungstechnische Massnahmen notwendig.

Weitere Vorteile der Erfindung werden in nachfolgenden Ausführungsbeispielen näher aufgezeigt und beschrieben. Es zeigen
- Figur 1: eine schematische Darstellung eine Ausführungsform einer Vorrichtung zur Herstellung eines Wattewickels mit einem umlaufenden Riemen;
- Figur 2: eine schematische Darstellung einer Ausführung einer Lagerung der Umlenkrolle in einem Querschnitt;
- Figur 3: eine schematische Darstellung einer Ausführung einer Lagerung der Öffnerrolle in einem Querschnitt;
- Figur 4: eine schematische Darstellung einer Ausführung einer Lagerung der Auswurfrolle in einem Querschnitt und
- Figur 5: eine schematische Darstellung einer Ausführung einer Lagerung der Spannrolle in einem Querschnitt.

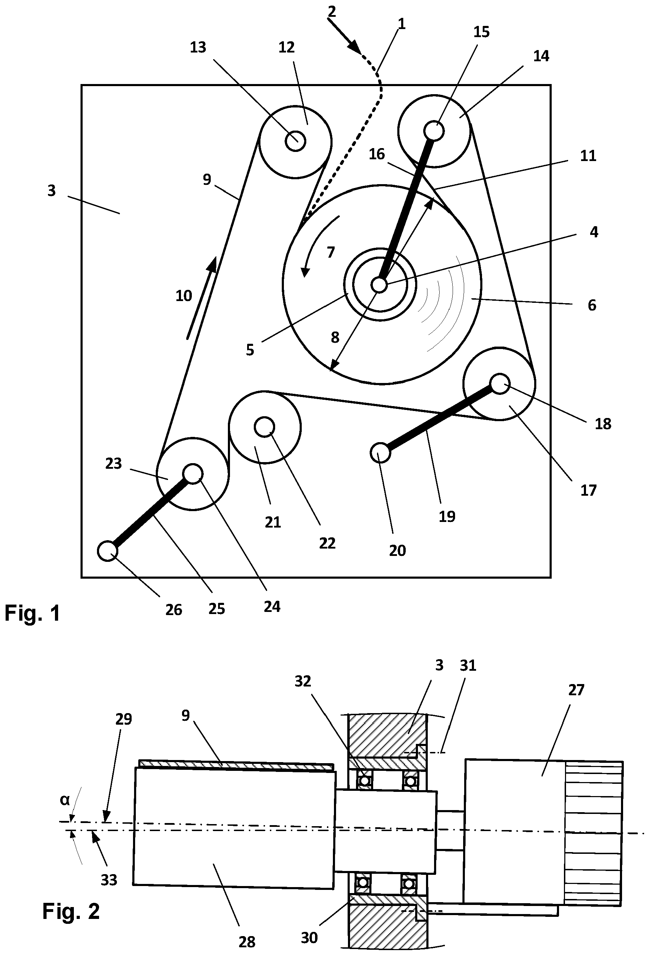

Figur 1 zeigt eine schematische Darstellung eine Ausführungsform einer Vorrichtung zur Herstellung eines Wattewickels 6 mit einem umlaufenden Riemen 9. Der Vorrichtung wird eine Wattebahn 1 in einer Laufrichtung 2 zugeführt. Dabei gelangt die Wattebahn 1 zwischen den Riemen 9 und einen Kern 5 und wird in der Folge auf den Kern 5 aufgewickelt, was zur Bildung des Wattewickels 6 führt. In einer ortsfest angeordneten Wickelachse 4 ist der Kern 5 drehbar gehalten. Auf dem Kern 5 ist der Wattewickel 6 aufgebaut, welcher einen Wattewickeldurchmesser 8 aufweist. Der Kern 5 respektive der Wattewickel 6 wird durch den Riemen 9 in einer Drehrichtung 7 in Rotation versetzt. Der Riemen 9 wird durch einen Antrieb (nicht gezeigt) in einer Laufrichtung 10 angetrieben und umläuft eine Umlenkrolle 12 mit einer Umlenkrollenachse 13, eine Öffnerrolle 14, eine Auswurfrolle 17 sowie eine Spannrolle 23. Der Riemen 9 bildet zwischen der Umlenkrolle 12 und der Öffnerrolle 14 eine Schlaufe 11 in welcher die Wickelachse 3 und damit auch der Kern 5 sowie der Wattewickel 6 angeordnet sind. Die Öffnerrolle 14 ist mit ihrer Öffnerrollenachse 15 an einem Öffnerarm 16 befestigt, wobei der Öffnerarm 16 mit seinem der Öffnerrolle 14 entgegengesetzten Ende in der Wickelachse 3 in einem Maschinengestell 3 schwenkbar gelagert ist. Die Auswurfrolle 17 ist mit ihrer Auswurfrollenachse 18 an einem Auswurfarm 19 drehbar gehalten, wobei der Auswurfarm 18 an seinem der Auswurfrolle 17 entgegengesetzten Ende in einem Drehpunkt 20 schwenkbar im Maschinengestell 3 gelagert ist. Die Spannrolle 23 ist mit ihrer Spannrollenachse 24 an einem Spannarm 25 drehbar gehalten, wobei der Spannarm 23 mit seinem der Spannrolle 23 entgegengesetzten Ende in einem Drehpunkt 26 schwenkbar im Maschinengestell 3 gelagert ist. Zur Stützung und Führung des Riemens 9 ist ausserhalb des Riemens 9 eine Führungsrolle 21 mit einer Führungsrollenachse 22 angeordnet. Die Führungsrolle 21 ist relativ zur Spannrolle 23 derart angeordnet, dass sich eine möglichst grosse Umschlingung der Spannrolle 23 durch den Riemen 9 ergibt. Auch die Führungsrolle 21 ist im Maschinengestell 3 drehbar gehalten.

Figur 2 zeigt eine schematische Darstellung einer Ausführung einer Lagerung der als Antriebswalze 28 ausgebildeten Umlenkrolle in einem Querschnitt. Über die Antriebswalze 28 läuft der Riemen 9. Die Antriebswalze 28 ist drehbar in einem Lagerflansch 30 befestigt. Die Antriebswalze 28 ist mit einem Antrieb 27 verbunden. Der Antrieb 27 dient dazu, den umlaufenden Riemen 9 in Laufrichtung 10 (siehe Figur 1) zu bewegen. Eine Antriebswalzenachse 29, und damit auch die Antriebswalze 28 und der Antrieb 27 sind gegenüber einer parallel zur Wickelachse angeordneten Linie 33 um den Winkel α geneigt angeordnet. Die Neigung α dabei im Lagerflansch 30 vorgegeben. Der Lagerflansch 30 ist mit einem parallel zur Wickelachse (respektive zur Linie 33) angeordneten Aussendurchmesser drehfest im Maschinegestell 3 mit Befestigungen 31 gehalten. Ein Innendurchmesser des Lagerflansches 30, welcher zur Aufnahme der Lager 32 der Antriebswalze 28 dient, ist entsprechend gegenüber der Linie 33 geneigt ausgeführt. Bei einer starren Ausführung einer Verbindung zwischen dem Antrieb 27 und der Antriebswalze 28 ist auch eine Achse des Antrieb 27 entsprechend geneigt auszuführen. Bei Verwendung einer geeigneten Kupplung zwischen dem Antrieb 27 und der Antriebswalze 28 kann die Achse des Antriebs 27 parallel zur Linie 33 ausgeführt werden.

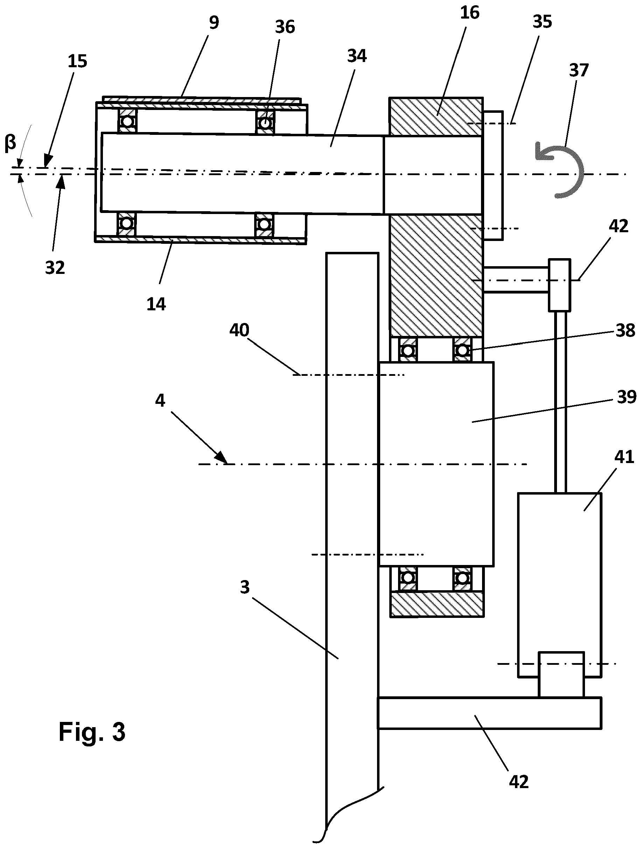

Figur 3 zeigt eine schematische Darstellung einer Ausführung einer Lagerung der Öffnerrolle 14 in einem Querschnitt. Die Öffnerrolle 14 ist drehbar auf einem Achsstummel 33 in Lagern 35 gehalten. Um die Öffnerrolle 14 läuft der Riemen 9 um. Eine Öffnerrollenachse 15 entspricht einer Achse des Achsstummels im Bereich der Lager 36. Dabei ist die Öffnerrollenachse 15 gegenüber der Wickelachse 4 um den Winkel β geneigt ausgeführt. Zum besseren Verständnis ist eine zur Wickelachse 4 parallele Linie 33 auf Höhe der Öffnerrollenachse 15 eingefügt. Der Achsstummel 34 ist in einem Öffnerarm 16 drehfest gehalten, dabei ist ein Bereich des Achsstummels 34, welcher der Befestigung im Öffnerarm 16 dient, parallel zur Wickelachse 4, respektive zur Linie 33 angeordnet. Der Achsstummel 34 ist mit Befestigungen 35 im Öffnerarm 16 drehfest gehalten. Die Befestigung 35 ist dabei derart ausgeführt, dass sie eine Einstellung 37 durch Drehung des Achsstummels 34 ermöglicht. Bei einer Drehung des Achsstummels 34 (wie mit der Einstellung 37 gezeigt) verändert sich die Neigung der Öffnerrollenachse 15 gegenüber der Linie 33 und damit der dargestellte Winkel β im gezeigten Querschnitt. Da der Riemen 9 die Öffnerrolle 14 nur teilweise umläuft (siehe Figur 1), ergibt sich durch die Einstellung 37 die Möglichkeit eine elastische Kompensation der durch die Spannkräfte des Riemen 9 verursachten Durchbiegungen des Achsstummels 34 einzustellen.

Der Öffnerarm 16 ist an einem Lagerzapfen 39 über die Lager 38 um die Wickelachse 4 drehbar, respektive schwenkbar, im Maschinengestell 3 gehalten. Der Lagerzapfen 39 ist mit Befestigungen 40 drehfest am Maschinengestell 3 gehalten. Über einen Anlenkpunkt 43 ist ein Pneumatikzylinder 41 am Öffnerarm 16 befestigt. Der Pneumatikzylinder 41 ist mit einer Halterung 42 am Maschinengestell 3 befestigt. Durch den Pneumatikzylinder 41 wird entsprechend der Öffnerarm 16 um die Wickelachse 4 verschwenkt, wenn ein sich in Vorrichtung befindlicher Wattewickel ausgestossen werden soll.

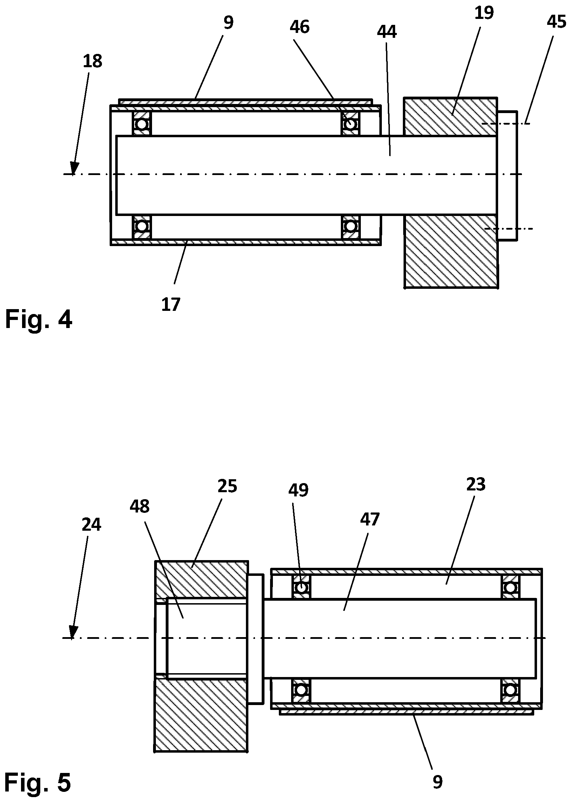

Figur 4 zeigt eine schematische Darstellung einer Ausführung einer Lagerung der Auswurfrolle 17 in einem Querschnitt. Die Auswurfrolle 17, welche ebenfalls teilweise vom Riemen 9 umschlungen ist, ist mit Lagern 46 drehbar auf einem Achsstummel 44 gehalten. Der Achsstummel 44 ist in der Auswurfrollenachse 18 im Auswurfarm 19 mit Befestigungen 45 drehfest gehalten. Eine Neigung der Auswurfrollenachse 18 gegenüber der Wickelachse 4 ist nicht vorgesehen, da die Kompensation durch die Umlenkrolle 12 (siehe Figur 2) und/oder die Öffnerrolle 14 (siehe Figur 3) ausreichend ist, um einen ruhigen zentrischen Lauf des Riemens 9 zu erreichen. Dasselbe gilt für die in einer schematischen Darstellung in Figur 5 in einem Querschnitt gezeigten Ausführung einer Lagerung der Spannrolle 23. Die Spannrolle 23, welche ebenfalls teilweise vom Riemen 9 umschlungen ist, ist mit Lagern 49 drehbar auf einem Achsstummel 47 gehalten. Der Achsstummel 47 ist in der Spannrollenachse 24 im Spannarm 25 drehfest gehalten. Die Halterung des Achsstummels 47 im Spannarm 25 ist in der gezeigten Ausführung beispielhaft mit einem Gewindezapfen 48 vorgesehen, welcher in ein Innengewinde im Spannarm 25 eingeschraubt ist. Der Gewindezapfen 48 ist dabei ein Teil des Achsstummels 47.

Die vorliegende Erfindung ist nicht auf die dargestellten und beschriebenen Ausführungsbeispiele beschränkt. Abwandlungen im Rahmen der Patentansprüche sind möglich.

### Bezugszeichenliste

- 1: Wattebahn
- 2: Laufrichtung Wattebahn
- 3: Maschinengestell
- 4: Wickelachse
- 5: Kern
- 6: Wattewickel
- 7: Drehrichtung Wattewickel
- 8: Wattewickeldurchmesser
- 9: Riemen
- 10: Laufrichtung Riemen
- 11: Schlaufe
- 12: Umlenkrolle
- 13: Umlenkrollenachse
- 14: Öffnerrolle
- 15: Öffnerrollenachse
- 16: Öffnerarm
- 17: Auswurfrolle
- 18: Auswurfrollenachse
- 19: Auswurfarm
- 20: Drehpunkt Auswurfarm
- 21: Führungsrolle
- 22: Führungsrollenachse
- 23: Spannrolle
- 24: Spannrollenachse
- 25: Spannarm
- 26: Drehpunkt Spannarm
- 27: Antrieb
- 28: Antriebswalze
- 29: Antriebswalzenachse
- 30: Lagerflansch
- 31: Befestigung Lagerflansch
- 32: Lager Antriebswalze
- 33: Parallele zur Wickelachse
- 34: Achsstummel Öffnerrolle
- 35: Befestigung Achsstummel Öffnerrolle
- 36: Lager Öffnerrolle
- 37: Einstellung Neigung
- 38: Lager Öffnerarm
- 39: Lagerzapfen Öffnerarm
- 40: Befestigung Lagerzapfen Öffnerarm
- 41: Pneumatikzylinder
- 42: Halterung
- 43: Anlenkpunkt
- 44: Achsstummel Auswurfrolle
- 45: Befestigung Achsstummel
- 46: Lager Auswurfrolle
- 47: Achsstummel Spannrolle
- 48: Gewindezapfen
- 49: Lager Spannrolle
- α: Neigung Umlenkrolle
- β: Neigung Öffnerrolle

## Patentansprüche

1. Vorrichtung zur Herstellung eines Wattewickels (6) aus einer Wattebahn (1) mit einem Maschinengestell (3) und mit einem umlaufenden endlosen Riemen (9) und mit einer drehbar gelagerten Umlenkrolle (12) mit einer Umlenkrollenachse (13) und mit einer drehbar gelagerten Öffnerrolle (14) mit einer Öffnerrollenachse (15) und mit einer drehbar gelagerten Auswurfrolle (17) mit einer Auswurfrollenachse (18) und mit einer drehbaren gelagerten Spannrolle (23) mit einer Spannrollenachse (24), wobei der Riemen (9) um die Spannrolle (23) und die Umlenkrolle (12) und die Öffnerrolle (14) und die Auswurfrolle (17) umläuft, und mit einem Kern (5), der zur Aufnahme des Wattewickels (6) in einer zwischen der Umlenkrolle (12) und der Öffnerrolle (14) gebildeten, mit einem zunehmendem Wattewickeldurchmesser (7) grösser werdenden, Schlaufe (11) des Riemens (9) ortsfest in einer Wickelachse (4) angeordnet ist, wobei die Öffnerrolle (14) und die Auswurfrolle (17) und die Spannrolle (23) jeweils drehbar auf einem einseitig und drehfest in einem verschwenkbaren Element (16, 19, 25) befestigten Achsstummel (34, 44, 47) drehbar gelagert sind und die Umlenkrolle (12) mit einer einseitigen Lagerung drehbar im Maschinengestell (3) gehalten ist, **dadurch gekennzeichnet, dass** eine Einstellung einer Neigung der Umlenkrollenachse (13) oder der Öffnerrollenachse (15) oder der Umlenkrollenachse (13) und der Öffnerrollenachse (15) zur Wickelachse (4) vorgesehen ist.

2. Vorrichtung nach Anspruch 1, **dadurch gekennzeichnet, dass** die Umlenkrollenachse (13) mit einer Neigung (α) von 0.05 bis 0.3 Winkelgraden zur Wickelachse (4) angeordnet ist.

3. Vorrichtung nach Anspruch 1 oder 2, **dadurch gekennzeichnet, dass** die Umlenkrolle (12) als Antriebswalze (28) mit einer Antriebswalzenachse (29) und mit einem Antrieb (27) ausgeführt ist und in einem Lagerflansch (30) drehbar befestigt ist, wobei die Antriebswalzenachse (29) mit einer Neigung (α) von 0.05 bis 0.3 Winkelgraden zur Wickelachse (4) angeordnet ist.

4. Vorrichtung nach zumindest einem der vorangehenden Ansprüche, **dadurch gekennzeichnet, dass** eine Einstellung einer Neigung (β) der Öffnerrollenachse (15) zur Wickelachse (4) durch Verdrehen des Achsstummels (33) in seiner Halterung im Maschinengestell (3) zwischen 0.1 und 0.8 Winkelgraden vorgesehen ist.

5. Vorrichtung nach zumindest einem der vorangehenden Ansprüche, **dadurch gekennzeichnet, dass** zumindest eine Führungsrolle (21) auf einer Aussenseite des Riemens (9) vorgesehen ist, wobei die Führungsrolle (21) ortsfest und drehbar beidseitig im Maschinengestell (3) gelagert ist.

6. Vorrichtung nach zumindest einem der vorangehenden Ansprüche, **dadurch gekennzeichnet, dass** der Achsstummel (33) der Öffnerrolle (14) an einem um die Wickelachse (4) im Maschinengestell (3) in der Wickelachse (4) schwenkbar gehaltenen Öffnerarm (16) zur Öffnung der Schlaufe (11) bei einem Wickelwechsel gelagert ist.

7. Vorrichtung nach zumindest einem der vorangehenden Ansprüche, **dadurch gekennzeichnet, dass** die Auswurfrolle (17) an einem schwenkbar im Maschinengestell (3) in einem Drehpunkt (20) gehaltenen Auswurfarm (19) gelagert ist.

8. Vorrichtung nach zumindest einem der vorangehenden Ansprüche, **dadurch gekennzeichnet, dass** die Spannrolle (23) in einem Spannarm (25) gehalten ist, wobei der Spannarm (25) schwenkbar in einem Drehpunkt (26) im Maschinengestell (3) gelagert und mit einem Pneumatikzylinder zur Spannung des Riemens (9) durch ein Schwenken des Spannarms (25) beaufschlagt ist.

9. Vorrichtung nach zumindest einem der vorangehenden Ansprüche, **dadurch gekennzeichnet, dass** für einen Riemenaustausch einzig eine Entlastung des Riemens (9) vorgesehen ist.

## Claims

1. Device for manufacturing a batting roll (6) from a batting web (1), comprising a machine frame (3); and comprising a circulating endless belt (9); and comprising a rotatably-borne deflection roller (12) having a deflection roller axis (13); and comprising a rotatably-borne opening roller (14) having an opening roller axis (15); and comprising a rotatably-borne ejection roller (17) having an ejection roller axis (18); and comprising a rotatably-borne tensioning roller (23) having a tensioning roller axis (24), wherein the belt (9) runs around the tensioning roller (23) and the deflection roller (12) and the opening roller (14) and the ejection roller (17); and comprising a core (5) that is arranged so as to be stationary in a roll axis (4) to receive the batting roll (6) in a loop (11) of the belt (9), which loop is formed between the deflection roller (12) and the opening roller (14) and becomes larger with an increasing batting roll diameter (7); wherein the opening roller (14) and the ejection roller (17) and the tensioning roller (23) are in each instance borne rotatably on a stump axle (34, 44, 47) attached on one side and in a rotationally-fixed manner in a pivotable element (16, 19, 25), and the deflection roller (12) is held rotatably in the machine frame (3) with a one-sided bearing; **characterized in that** an adjustment of the inclination of the deflection roller axis (13) or of the opening roller axis (15), or of the deflection roller axis (13) and the opening roller axis (15), relative to the roll axis (4) is provided.

2. Device according to claim 1, **characterized in that** the deflection roller axis (13) is arranged with an inclination (α) of 0.05 to 0.3 angular degrees relative to the roll axis (4).

3. Device according to claim 1 or 2, **characterized in that** the deflection roller (12) is designed as a drive roller (28) with a drive roller axis (29) and with a drive (27) and is rotatably fastened in a bearing flange (30), wherein the drive roller axis (29) is arranged with an inclination (α) of 0.05 to 0.3 angular degrees relative to the roll axis (4).

4. Device according to at least one of the preceding claims, **characterized in that** an adjustment of an inclination (β) of the opening roller axis (15) relative to the roll axis (4) is provided by rotating the axle stub (33) between 0.1 and 0.8 angular degrees in its mounting in the machine frame (3).

5. Device according to at least one of the preceding claims, **characterized in that** at least one guide roller (21) is provided on an outside of the belt (9), wherein the guide roller (21) is borne in a stationary and rotatable manner on both sides in the machine frame (3).

6. Device according to at least one of the preceding claims, **characterized in that** the stub roller (33) of the opening roller (14) is borne on an opening arm (16), which is held in the machine frame (3) in the roll axis (4) so as to be pivotable about the roll axis (4), for opening of the loop (11) during a roll change.

7. Device according to at least one of the preceding claims, **characterized in that** the ejection roller (17) is borne on an ejection arm (19) that is held pivotably in the machine frame (3) at a pivot point (20).

8. Device according to at least one of the preceding claims, **characterized in that** the tensioning roller (23) is held in a tensioning arm (25), wherein the tensioning arm (25) is pivotably borne at a pivot point (26) in the machine frame (3) and is acted upon by a pneumatic cylinder for tensioning of the belt (9) via a pivoting of the tensioning arm (25).

9. Device according to at least one of the preceding claims, **characterized in that**, for a belt replacement, only a relief of the belt (9) is provided.

## Revendications

1. Dispositif pour la fabrication d'un rouleau d'ouate (6) à partir d'une bande d'ouate (1) comportant un bâti de machine (3) et comportant une courroie (9) sans fin périphérique et comportant un galet de renvoi (12) monté de manière à pouvoir tourner et comportant un axe de galet de renvoi (13) et comportant un galet ouvreur (14) monté de manière à pouvoir tourner et comportant un axe de galet ouvreur (15) et comportant un galet éjecteur (17) monté de manière à pouvoir tourner et comportant un axe de galet éjecteur (18) et comportant un galet tendeur (23) monté de manière à pouvoir tourner et comportant un axe de galet tendeur (24), dans lequel la courroie (9) tourne autour du galet tendeur (23) et du galet de renvoi (12) et du galet ouvreur (14) et du galet éjecteur (17), et comportant un noyau (5) qui, pour recevoir le rouleau d'ouate (6), est disposé de manière fixe dans un axe de rouleau (4) dans une boucle (11) de la courroie (9) formée entre le galet de renvoi (12) et le galet ouvreur (14) et s'agrandissant au fur et à mesure que le diamètre de rouleau d'ouate (7) augmente, dans lequel le galet ouvreur (14) et le galet éjecteur (17) et le galet tendeur (23) sont respectivement montés de manière à pouvoir tourner sur un bout d'axe (34, 44, 47) fixé d'un côté et de manière fixe en rotation dans un élément (16, 19, 25) pouvant pivoter et le galet de renvoi (12) est maintenu de manière à pouvoir tourner dans le bâti de machine (3) au moyen d'un palier unilatéral, **caractérisé en ce qu'**un réglage d'une inclinaison de l'axe de galet de renvoi (13) ou de l'axe de galet ouvreur (15) ou de l'axe de galet de renvoi (13) et de l'axe de galet ouvreur (15) par rapport à l'axe de rouleau (4) est prévu.

2. Dispositif selon la revendication 1, **caractérisé en ce que** l'axe de galet de renvoi (13) est disposé avec une inclinaison (α) allant de 0,05 à 0,3 degré d'angle par rapport à l'axe de rouleau (4).

3. Dispositif selon la revendication 1 ou 2, **caractérisé en ce que** le galet de renvoi (12) est réalisé sous forme de galet d'entraînement (28) comportant un axe de galet d'entraînement (29) et comportant un entraînement (27) et est fixé de manière à pouvoir tourner dans une bride de palier (30), dans lequel l'axe de galet d'entraînement (29) est disposé avec une inclinaison (α) allant de 0,05 à 0,3 degré d'angle par rapport à l'axe de rouleau (4).

4. Dispositif selon au moins l'une des revendications précédentes, **caractérisé en ce qu'**un réglage d'une inclinaison (β) de l'axe de galet ouvreur (15) par rapport à l'axe de rouleau (4), comprise entre 0,1 et 0,8 degré d'angle, par rotation du bout d'axe (33) dans son support dans le bâti de machine (3) est prévu.

5. Dispositif selon au moins l'une des revendications précédentes, **caractérisé en ce qu'**au moins un galet de guidage (21) est prévu sur un côté extérieur de la courroie (9), dans lequel le galet de guidage (21) est monté de manière fixe et de manière à pouvoir tourner des deux côtés dans le bâti de machine (3).

6. Dispositif selon au moins l'une des revendications précédentes,
**caractérisé en ce que** le bout d'axe (33) du galet ouvreur (14) est monté sur un bras ouvreur (16) maintenu de manière à pouvoir pivoter autour de l'axe de rouleau (4) dans le bâti de machine (3) dans l'axe de rouleau (4) afin d'ouvrir la boucle (11) lors d'un changement de rouleau.

7. Dispositif selon au moins l'une des revendications précédentes,
**caractérisé en ce que** le galet éjecteur (17) est monté sur un bras éjecteur (19) maintenu de manière à pouvoir tourner dans le bâti de machine (3) en un point de rotation (20).

8. Dispositif selon au moins l'une des revendications précédentes,
**caractérisé en ce que** le galet tendeur (23) est maintenu dans un bras tendeur (25), dans lequel le bras tendeur (25) est monté de manière à pouvoir pivoter en un point de rotation (26) dans le bâti de machine (3) et est sollicité par un vérin pneumatique pour tendre la courroie (9) au moyen d'un pivotement du bras tendeur (25).

9. Dispositif selon au moins l'une des revendications précédentes,
**caractérisé en ce que,** pour un remplacement de la courroie, uniquement une décharge de la courroie (9) est prévue.
